# EUROPÄISCHE PATENTSCHRIFT

(11) **EP 2 918 885 B1**
(45) Veröffentlichungstag und Bekanntmachung des Hinweises auf die Patenterteilung: **27.02.2019**
(21) Anmeldenummer: 15157702.0
(22) Anmeldetag: 05.03.2015
(51) Int. Cl.: F16L 11/127, F16L 11/04

(54) **SCHLAUCHLEITUNG FÜR EIN FLUID**
FLEXIBLE PIPE FOR A FLUID
TUYAU FLEXIBLE POUR UN FLUIDE

(30) Priorität: 14.03.2014 DE 102014103479
(43) Veröffentlichungstag der Anmeldung: 16.09.2015
(73) Patentinhaber: VERITAS AG, 63571 Gelnhausen (DE)
(72) Erfinder: van Hooren, Marc, 63579 Freigericht (DE); Stoschek, Bernd, 63699 Kefenrod (DE); Zülch, Wilfried, 63571 Gelnhausen (DE)
(74) Vertreter: Patentship Patentanwaltsgesellschaft mbH

(56) Entgegenhaltungen:
- EP-A1- 1 260 747
- EP-A2- 1 249 337
- DE-B- 1 251 600
- DE-B4- 10 312 942
- US-A- 3 828 112
- US-A- 5 142 782
- US-A- 5 192 476
- US-A1- 2001 001 395
- US-A1- 2006 099 368

## Beschreibung

Die vorliegende Erfindung betrifft eine Schlauchleitung für ein Fluid und ein Verfahren zum Herstellen einer Schlauchleitung für ein Fluid.

Die Druckschrift DE 103 12 942 B4 beschreibt eine mehrschichtige, elektrisch leitfähige Leitung mit einer Trägerschicht und einer innerhalb der Trägerschicht angeordneten Sperrschicht mit einem elektrisch leitfähigen Abschnitt, der sich in Längsrichtung der Leitung erstreckt. Die radiale Erstreckung der elektrisch leitfähigen Abschnitte ist dabei genauso groß wie die radiale Erstreckung der Sperrabschnitte. Die elektrisch leitfähigen Abschnitte erstrecken sich somit über die gesamte Wandstärke der Sperrschicht. Die Sperrschicht ist daher inhomogen, da diese abwechselnd aus leitfähigen und nichtleitfähigen Abschnitten aufgebaut ist.

Die elektrisch leitfähigen Abschnitte der Sperrschicht bestehen aus Zusammensetzungen auf Basis von Fluorpolymeren. Diese haben schlechtere mechanische Eigenschaften, wie beispielsweise Härte, Sprödigkeit oder Kälteschlagzähigkeit, als die korrespondierenden Grundwerkstoffe in den nichtleitenden Abschnitten.

In der EP 1 260 747 A1 ist ein Schlauch zur Leitung von Kraftstoffen offenbart, welcher eine äußere Hauptkörperschicht und eine innere Schlauchschicht umfasst. An der Innenwand der inneren Schlauchschicht ist eine Leiterbahn angeordnet.

In der US 2006/0099368 A1 ist eine mehrschichtige Kraftstoffleitung mit einer Innenschicht aus einem Polymer und einer dispergierten Phase von leitfähigen Partikeln offenbart.

Es ist die der Erfindung zugrundeliegende Aufgabe, eine Schlauchleitung anzugeben, die geeignet ist, elektrische Ladungen abzuleiten, ohne die mechanischen oder dynamischen Eigenschaften der Schlauchleitung zu verschlechtern.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Schlauchleitung für ein Fluid gelöst, mit einer äußeren Trägerschicht; einer homogenen Sperrschicht zum Verhindern einer Diffusion des Fluids, die innerhalb der Trägerschicht angeordnet ist; und einem elektrisch leitfähigen Streifen zum Ableiten elektrischer Ladungen, der auf der Innenseite der Sperrschicht angeordnet ist. Die Schlauchleitung kann ein Kraftstoffschlauch für Brennstoffe in einem Kraftfahrzeug sein. Das Fluid kann Kohlenwasserstoffe umfassen. Dadurch wird beispielsweise der technische Vorteil erreicht, dass die mechanischen Eigenschaften der Sperrschicht durch die elektrisch leitfähigen Streifen nicht nachteilig
beeinflusst werden. Die dynamischen Eigenschaften der Schlauchleitung bleiben ebenfalls erhalten durch die zusätzlichen leitfähigen Streifen nicht negativ beeinflusst.

In einer vorteilhaften Ausführungsform der Schlauchleitung umfasst die Sperrschicht ein thermoplastisches Fluorelastomer-Vulkanisat F-TPE-V oder ein thermoplastisches Fluorelastomer F-TPE. Dadurch wird beispielsweise der technische Vorteil erreicht, dass besonders geeignete Materialien für die Sperrschicht verwendet werden, die beispielweise eine Diffusion von flüssigen Kohlenwasserstoffen verhindern.

Erfindungsgemäß umfasst der leitfähige Streifen ein thermoplastisches Fluorelastomer-Vulkanisat F-TPE-V, oder ein thermoplastisches Fluorelastomer F-TPE, wie beispielsweise Terpolymer aus Tetrafluorethylen, Hexafluoropropylen, Vinylidenfluorid THV, Terpolymer aus Ethylen Tetrafluorethylen und Hexafluorpropylen EFEP, Copolymer aus Ethylen und Tetrafluorethylen ETFE, Vinylidenfluorid VDF, das mit leitfähigen Füllstoffen, wie beispielsweise Ruß/Carbon Black, Carbon Nanotubes (Kohlenstoffnanoröhrchen) CNT, Carbonfaser CF oder Graphit versetzt ist. Dadurch wird beispielsweise der technische Vorteil erreicht, dass besonders geeignete Materialien für den elektrisch leitfähigen Streifen verwendet werden, die eine Ladung effizient ableiten können.

In einer weiteren vorteilhaften Ausführungsform der Schlauchleitung umfasst die Schlauchleitung mehrere elektrisch leitfähige Streifen, die auf der Innenseite der Sperrschicht verlaufen. Dadurch wird beispielsweise der technische Vorteil erreicht, dass Ladungen an mehreren Stellen der Innenseite besonders effizient abgeleitet werden können.

In einer weiteren vorteilhaften Ausführungsform der Schlauchleitung kreuzen sich die elektrisch leitfähigen Streifen auf der Innenseite der Sperrschicht. Dadurch wird beispielsweise der technische Vorteil erreicht, dass die Ladungen von einem elektrisch leitfähigen Streifen auf den anderen elektrisch leitfähigen Streifen übertragen werden können. Eine Unterbrechung eines elektrisch leitfähigen Streifens führt somit nicht zu einer Unterbrechung einer Ladungsableitung.

Erfindungsgemäß ragt der elektrisch leitfähige Streifen aus der Sperrschicht in das Innere der Schlauchleitung. Dadurch wird beispielsweise der technische Vorteil erreicht, dass der elektrische Streifen das Fluid zusätzlich führt und Verwirbelungen des Fluids verhindert werden.

In einer weiteren vorteilhaften Ausführungsform der Schlauchleitung umfasst die homogene Sperrschicht eine Vertiefung zum Aufnehmen des elektrisch leitfähigen Streifens. Dadurch wird beispielsweise der technische Vorteil erreicht, dass der elektrisch leitfähige Streifen fest an der Innenseite der Sperrschicht angebracht ist.

In einer weiteren vorteilhaften Ausführungsform der Schlauchleitung weist der elektrisch leitfähige Streifen eine Dicke in radialer Richtung zwischen 30 µm und 60 µm auf. Dadurch wird beispielsweise der technische Vorteil erreicht, dass die Sperrschicht nur in geringer Weise durch den elektrisch leitfähigen Streifen beeinflusst wird.

In einer weiteren vorteilhaften Ausführungsform der Schlauchleitung umfasst die Schlauchleitung einen weiteren elektrisch leitfähigen Streifen, der auf der Außenseite der Sperrschicht angeordnet ist. Dadurch wird beispielsweise der technische Vorteil erreicht, dass sich eine Ladungsableitung weiter verbessert.

In einer weiteren vorteilhaften Ausführungsform der Schlauchleitung deckt der elektrische Streifen die Sperrschicht kreisbogenförmig ab. Dadurch wird beispielsweise der technische Vorteil erreicht, dass der elektrisch leitfähige Streifen in einem großflächigen Kontakt mit dem Fluid steht.

In einer weiteren vorteilhaften Ausführungsform der Schlauchleitung umfasst die Schlauchleitung vier elektrische Streifen, die jeweils in einem Abstand von 90° zueinander angeordnet sind. Dadurch wird beispielsweise der technische Vorteil erreicht, dass eine effiziente Ladungsableitung in jedem Quadrant der Schlauchleitung ermöglicht wird.

In einer weiteren vorteilhaften Ausführungsform der Schlauchleitung umfasst die Schlauchleitung eine Innenschicht zum Abdecken des elektrischen Streifens auf der Innenseite der Sperrschicht. Dadurch wird beispielsweise der technische Vorteil erreicht, dass der elektrisch leitfähige Streifen direkt in Kontakt mit dem Fluid gelangt.

Gemäß einem zweiten Aspekt der Erfindung wird die Aufgabe durch ein Verfahren zum Herstellen einer Schlauchleitung für ein Fluid gelöst, mit den Schritten eines Extrudierens eines elektrisch leitfähigen Streifens zum Ableiten elektrischer Ladungen; eines Aufextrudierens einer homogenen Sperrschicht auf den elektrisch leitfähigen Streifen zum Verhindern einer Diffusion des Fluids; und eines Aufextrudierens einer äußeren Trägerschicht auf die Sperrschicht. Dadurch wird beispielsweise der technische Vorteil erreicht, dass eine Schlauchleitung hergestellt wird, bei der die mechanischen Eigenschaften der Sperrschicht durch die elektrisch leitfähigen Streifen nicht nachteilig beeinflusst werden.

Erfindungsgemäß wird der elektrisch leitfähige Streifen in einer Dicke zwischen 30 µm und 60 µm hergestellt. Dadurch wird beispielsweise ebenfalls der technische Vorteil erreicht, dass die mechanischen Eigenschaften der Sperrschicht durch die elektrisch leitfähigen Streifen nicht nachteilig beeinflusst werden.

In einer weiteren vorteilhaften Ausführungsform des Verfahrens wird der elektrisch leitfähige Streifen im Inneren der umgebenden Sperrschicht extrudiert. Dadurch wird beispielsweise der technische Vorteil erreicht, dass sich die Schlauchleitung auf einfache Weise herstellen lässt.

Ausführungsbeispiele der Erfindung sind in den Zeichnungen dargestellt und werden im Folgenden näher beschrieben.

Es zeigen:
- Fig. 1: eine Querschnittansicht der Schlauchleitung; und
- Fig. 2: eine weitere Querschnittansicht der Schlauchleitung.

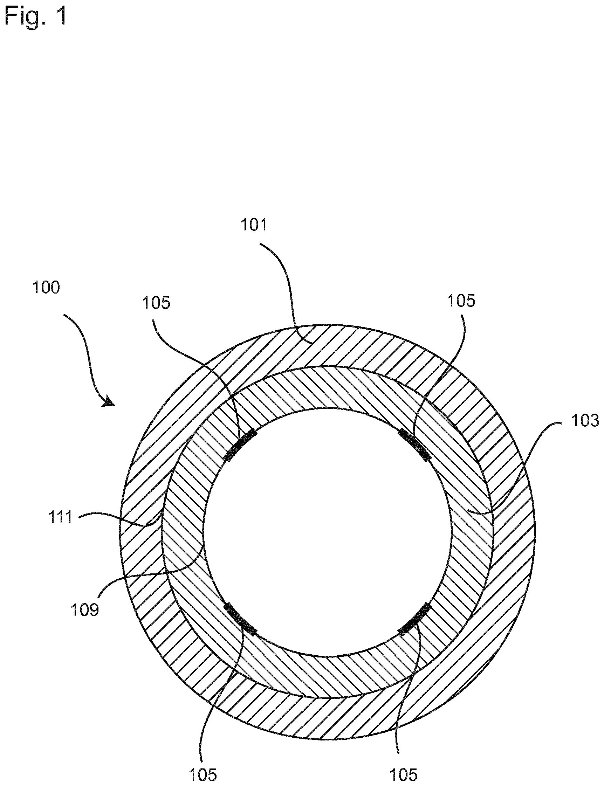

Fig. 1 zeigt eine Querschnittansicht der Schlauchleitung 100 zum Leiten eines Fluids, beispielsweise für einen Kraftstoffschlauch für Brennstoffe in einem Kraftfahrzeug. Die Schlauchleitung 100 umfasst eine äußere Trägerschicht 101, die der Schlauchleitung 100 Festigkeit verleiht und als Träger für weitere Schichten der Schlauchleitung 100 dient. In die Trägerschicht 101 kann zur Erhöhung der Festigkeit ein Gewebe eingearbeitet sein. Um die Trägerschicht 101 herum können weitere Schichten angeordnet sein. Die Trägerschicht 101 ist beispielsweise aus einem ozonbeständigen Material gebildet, das chloriertes Polyethylen CPE, chlorsulfoniertes Polyethylen CSM, Acrylnitril Butadien Elastomer NBR, Chloropren-Elastomer CR, Epichlorhydrin Elastomer ECO, Ethylen Acrylat Elastomer AEM, Acrylat Elastomer ACM, Ethylen Vinylacetat Elastomer EVM oder thermoplastische Elastomere TPE (Polyolefine) umfasst. Die Trägerschicht 101 weist typischerweise bei Schläuchen eine Dicke von 0,8 mm bis 1,5 mm und einen Durchmesser von 7 mm bis 50 mm auf.

Im Inneren der schlauchförmigen Trägerschicht 101 ist eine geschlossen umlaufende, homogene und nichtleitende Sperrschicht 103 angeordnet, die eine Diffusion von Bestandteilen des Fluids durch die Schlauchleitung 100 nach außen verhindert. Die Sperrschicht 103 weist an jeder Stelle im Wesentlichen die gleiche radiale Dicke auf. Die homogene Sperrschicht 103 ist nicht, durch elektrisch leitfähige Streifen unterbrochen. Die Sperrschicht 103 ist beispielsweise aus thermoplastischem Fluorelastomer-Vulkanisat F-TPE-V oder aus thermoplastischem Fluorelastomer F-TPE gebildet. Die Sperrschicht 103 weist typischerweise eine Dicke von 0,1 mm bis 0,25 mm auf.

Auf der Innenseite 109 der durchgehenden Sperrschicht 103 sind vier elektrisch leitfähige Streifen 105 zum Ableiten elektrostatischer Ladungen angeordnet, die in Längsrichtung der Schlauchleitung 100 verlaufen und zusätzlich zur Sperrschicht 103 ausgebildet sind. Die elektrisch leitfähigen Streifen 105 sind beispielsweise als dünne Streifen mit einer Dicke von 30 µm bis 60 µm ausgebildet, die an der Innenseite 109 der geschlossenen Sperrschicht 103 aufliegen. Die elektrisch leitfähigen Streifen 105 sind mit dem Fluid in Kontakt. Demgegenüber sind die elektrisch leitfähigen Streifen 105 nicht mit der Trägerschicht 101 in Kontakt. Die elektrisch leitfähigen Streifen sind beispielsweise aus einem thermoplastischen Fluorelastomer-Vulkanisat F-TPE-V, einem thermoplastischen Fluorelastomer F-TPE oder einem Fluorthermoplast gebildet, wie beispielsweise einem Terpolymer aus Tetrafluorethylen, Hexafluoropropylen, Vinylidenfluorid THV, einem Terpolymer aus Ethylen Tetrafluorethylen und Hexafluorpropylen EFEP, einem Copolymer aus Ethylen und Tetrafluorethylen ETFE, einem Vinylidenfluorid VDF, das jeweils mit entsprechenden leitfähigen Füllstoffen, wie beispielsweise Ruß/Carbon Black, Carbon Nanotubes (Kohlenstoffnanoröhrchen) CNT, Carbonfaser CF und/oder Graphit versetzt ist.

Dadurch ergibt sich der Vorteil, dass die leitfähigen Streifen 105 nicht in die Sperrschicht 103 integriert sind und die Sperrschicht 103 nicht von den leitfähigen Streifen 105 unterbrochen wird. Die mechanischen Eigenschaften der Sperrschicht 103 werden nicht nachteilig von den elektrisch leitfähigen Streifen 105 beeinflusst, da diese an der Innenseite 109 der geschlossenen, nichtleitenden Sperrschicht 103 aufliegen. Zudem lässt sich durch die Anordnung der elektrisch leitfähigen Streifen 105 weiter im Inneren der Schlauchleitung 100 Material für die Herstellung der elektrisch leitfähigen Streifen 105 einsparen.

Die dynamischen Eigenschaften der Sperrschicht 103 bleiben erhalten und werden durch die zusätzlichen leitfähigen Streifen 105 nicht negativ beeinflusst. Die elektrischen Streifen 105 verändern die Druckbeständigkeit, das Dämpfungsverhalten und die mechanischen Auslenkungen der Schlauchleitung 100 daher nicht. Zudem werden die Permeationseigenschaften der Sperrschicht 103 durch die leitfähigen Streifen 105 nicht beeinflusst. Die homogene Sperrschicht 103 weist keine Schwachstellen auf, so dass ein Reißen oder eine Beschädigung entlang von Nahtstellen unterbleibt.

Durch diese besondere Konstruktion der Schlauchleitung ist es möglich, leitfähige thermoplastische Materialien, wie beispielsweise thermoplastische Elastomere TPE oder vernetzte thermoplastische Elastomere TPV für die leitfähigen Streifen 105 zu verwenden. Die thermoplastischen Materialien können Polyamide, Tetraflourethylen-Hexafluorpropylen-Vinylidenfluorid-Coploymer THV, Ethylen-Tetrafluorethylen ETFE, Ethylen-Tetrafluorethylen-Hexafluorpropen EFEP umfassen. Die Fluorwerkstoffe verhindern zuverlässig eine Diffusion von Kohlenwasserstoffen. Aufgrund der geringen Schichtstärke dieser Materialien wird die Schlauchcharakteristik nicht beeinflusst.

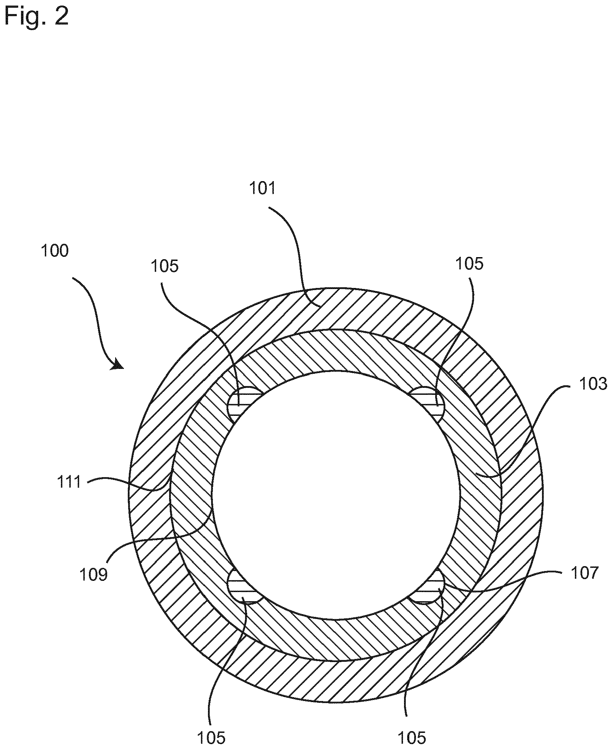

Fig. 2 zeigt eine Querschnittansicht der Schlauchleitung 100 zum Leiten eines Fluids, beispielsweise einen Kraftstoffschlauch für Brennstoffe in einem Kraftfahrzeug. Die Schlauchleitung 100 umfasst eine Sperrschicht 103 mit Vertiefungen 107, in die die elektrisch leitfähigen Streifen 105 eingelegt sind. Die elektrisch leitfähigen Streifen 105 sind in entsprechender Weise zu den Vertiefungen 107 geformt und schließen flächenbündig mit der Innenseite 109 der Sperrschicht 103 ab. Im Übrigen entspricht die Konstruktion der Schlauchleitung derjenigen, die in Zusammenhang mit Fig.1 erläutert worden ist.

Im Allgemeinen können die elektrisch leitfähigen Streifen 105 jedoch auch ein Stück weit in das Innere der Schlauchleitung 100 ragen, so dass diese die Strömung des Fluids in der Schlauchleitung 100 unterstützen und Verwirbelungen verhindern. Die elektrischen Steifen 105 können in parallelen Geraden zueinander angeordnet sein oder spiralförmig an der Innenseite 109 der Sperrschicht 103 verlaufen. Die elektrisch leitfähigen Steifen 105 können jedoch auch abwechselnd in einer rechtsorientierten und einer linksorientierten Spiralform angeordnet sein, so dass sich eine Vielzahl von Kreuzungspunkten zwischen den jeweiligen elektrisch leitfähigen Steifen 105 ergibt. An diesen Kreuzungspunkten kann eine elektrische Ladung von dem einen elektrisch leitfähigen Steifen 105 auf einen anderen elektrisch leitfähigen Steifen 105 überwechseln. Eine punktuelle Unterbrechung von elektrisch leitfähigen Steifen 105 kann dadurch kompensiert werden. Zudem können zusätzlich weitere elektrisch leitfähige Streifen 105 an einer Außenseite 111 der Sperrschicht 103 angeordnet sein.

Die Schlauchleitung 100 wird beispielsweise durch ein Verfahren hergestellt bei dem zunächst die elektrisch leitfähigen Streifen 105 zum Ableiten elektrischer Ladungen aus einer Extrusionspinole innenliegend extrudiert werden, beispielsweise mit einer Dicke zwischen 30 µm und 60 µm. Anschließend wird von außen die homogenen Sperrschicht 103 mit einer gleichmäßigen Schichtdicke auf den elektrisch leitfähigen Streifen zum Verhindern einer Diffusion des Fluids aufextrudiert. Danach wird die äußere Trägerschicht 101 mit einer gleichmäßigen Schichtdicke auf die Sperrschicht 103 aufextrudiert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Schlauchleitung
- 101: Trägerschicht
- 103: Sperrschicht
- 105: leitfähiger Streifen
- 107: Vertiefung
- 109: Innenseite
- 111: Außenseite

## Patentansprüche

1. Schlauchleitung (100) für ein Fluid, mit:
einer äußeren Trägerschicht (101);
einer homogenen Sperrschicht (103) zum Verhindern einer Diffusion des Fluids, die innerhalb der Trägerschicht (103) angeordnet ist; und
einem elektrisch leitfähigen Streifen (105) zum Ableiten elektrischer Ladungen, der auf der Innenseite (109) der Sperrschicht (103) angeordnet ist;
wobei der leitfähige Streifen (105) ein thermoplastisches Fluorelastomer-Vulkanisat oder ein thermoplastisches Fluorelastomer umfasst, das mit leitfähigen Füllstoffen versetzt ist,
wobei der elektrisch leitfähige Streifen (105) aus der Sperrschicht (103) in das Innere der Schlauchleitung (100) ragt, und
**dadurch gekennzeichnet, dass** der elektrisch leitfähige Streifen (105) eine Dicke in radialer Richtung zwischen 30 µm und 60 µm aufweist.

2. Schlauchleitung (100) nach Anspruch 1, wobei die Sperrschicht (103) ein thermoplastisches Fluorelastomer-Vulkanisat oder thermoplastisches Fluorelastomer umfasst.

3. Schlauchleitung (100) nach Anspruch 1 oder 2, wobei die Schlauchleitung (100) mehrere elektrisch leitfähige Streifen (105) umfasst, die auf der Innenseite der Sperrschicht (103) verlaufen.

4. Schlauchleitung (100) nach Anspruch 3, wobei die elektrisch leitfähigen Streifen (105) sich auf der Innenseite der Sperrschicht (103) kreuzen.

5. Schlauchleitung (100) nach einem der vorangehenden Ansprüche, wobei die homogene Sperrschicht (103) eine Vertiefung (107) zum Aufnehmen des elektrisch leitfähigen Streifens (105) umfasst..

6. Schlauchleitung (100) nach einem der vorangehenden Ansprüche, wobei die Schlauchleitung (100) einen elektrisch leitfähigen Streifen (105) umfasst, der auf der Außenseite (111) der Sperrschicht (103) angeordnet ist.

7. Schlauchleitung (100) nach einem der vorangehenden Ansprüche, wobei der elektrische Streifen (105) die Sperrschicht (103) kreisbogenförmig abdeckt.

8. Schlauchleitung (100) nach einem der vorangehenden Ansprüche, wobei die Schlauchleitung (100) vier elektrische Streifen (105) umfasst, die jeweils in einem Abstand von 90° zueinander angeordnet sind.

9. Schlauchleitung (100) nach einem der vorangehenden Ansprüche, wobei die Schlauchleitung (100) eine Innenschicht zum Abdecken des elektrischen Streifens auf der Innenseite (109) der Sperrschicht (103) umfasst.

10. Verfahren zum Herstellen einer Schlauchleitung (100) für ein Fluid mit den Schritten,
Extrudieren eines elektrisch leitfähigen Streifens (105) zum Ableiten elektrischer Ladungen;
Aufextrudieren einer homogenen Sperrschicht (103) auf den elektrisch leitfähigen Streifen (105) zum Verhindern einer Diffusion des Fluids; und
Aufextrudieren einer äußeren Trägerschicht (101) auf die Sperrschicht (103);
wobei der leitfähige Streifen (105) ein thermoplastisches Fluorelastomer-Vulkanisat oder ein thermoplastisches Fluorelastomer umfasst, das mit leitfähigen Füllstoffen versetzt ist, wobei der elektrisch leitfähige Streifen (105) aus der Sperrschicht (103) in das Innere der Schlauchleitung (100) ragt, und wobei der elektrisch leitfähige Streifen (105) in einer Dicke zwischen 30 µm und 60 µm hergestellt wird.

11. Verfahren nach einem der Ansprüche 10, wobei der elektrisch leitfähige Streifen (105) im Inneren der umgebenden Sperrschicht (103) extrudiert wird.

## Claims

1. Hose line (100) for a fluid, with:
an exterior backing layer (101);
a homogeneous barrier layer (103) arranged within the backing layer (103) to prevent diffusion of the fluid; and
an electrically conductive strip (105) arranged on the internal side (109) of the barrier layer (103) to dissipate electrical charges;
wherein the conductive strip (105) comprises a thermoplastic fluoroelastomer vulcanizate or a thermoplastic fluoroelastomer, to which conductive fillers have been admixed,
wherein the electrically conductive strip (105) protrudes from the barrier layer (103) into the interior of the hose line (100), and
**characterized in that** the thickness of the electrically conductive strip (105) in radial direction is from 30 µm to 60 µm.

2. Hose line (100) according to Claim 1, wherein the barrier layer (103) comprises a thermoplastic fluoroelastomer vulcanizate or thermoplastic fluoroelastomer.

3. Hose line (100) according to Claim 1 or 2, wherein the hose line (100) comprises a plurality of electrically conductive strips (105) which run along the internal side of the barrier layer (103).

4. Hose line (100) according to Claim 3, wherein the electrically conductive strips (105) intersect with one another on the internal side of the barrier layer (103).

5. Hose line (100) according to any of the preceding claims, wherein the homogeneous barrier layer (103) comprises a depression (107) to receive the electrically conductive strip (105).

6. Hose line (100) according to any of the preceding claims, wherein the hose line (100) comprises an electrically conductive strip (105) arranged on the external side (111) of the barrier layer (103).

7. Hose line (100) according to any of the preceding claims, wherein the electrical strip (105) takes the form of an arc of a circle in covering the barrier layer (103).

8. Hose line (100) according to any of the preceding claims, wherein the hose line (100) comprises four electrical strips (105) arranged at 90° to one another.

9. Hose line (100) according to any of the preceding claims, wherein the hose line (100) comprises an internal layer to cover the electrical strip on the internal side (109) of the barrier layer (103).

10. Process for the production of a hose line (100) for a fluid with the following steps:
extrusion of an electrically conductive strip (105) to dissipate electrical charges;
extrusion of a homogeneous barrier layer (103) onto the electrically conductive strip (105) to prevent diffusion of the fluid; and
extrusion of an exterior backing layer (101) onto the barrier layer (103);
wherein the conductive strip (105) comprises a thermoplastic fluoroelastomer vulcanizate or a thermoplastic fluoroelastomer, to which conductive fillers have been admixed, wherein the electrically conductive strip (105) protrudes from the barrier layer (103) into the interior of the hose line (100), and wherein the electrically conductive strip (105) is produced with a thickness of from 30 µm to 60 µm.

11. Process according to any of the Claims 10, wherein the electrically conductive strip (105) is extruded in the interior of the surrounding barrier layer (103).

## Revendications

1. Tuyau flexible (100) pour un fluide, comprenant :
une couche de support extérieure (101) ;
une couche de blocage homogène (103) pour empêcher une diffusion du fluide, qui est disposée à l'intérieur de la couche de support (103) ; et
une bande électriquement conductrice (105) pour évacuer des charges électriques, qui est disposée sur le côté intérieur (109) de la couche de blocage (103) ;
la bande conductrice (105) comprenant un vulcanisat en fluoroélastomère thermoplastique ou un fluoroélastomère thermoplastique auquel sont ajoutées des charges conductrices,
la bande électriquement conductrice (105) pénétrant hors de la couche de blocage (103) à l'intérieur du tuyau flexible (100), et
**caractérisé en ce que** la bande électriquement conductrice (105) présente une épaisseur dans la direction radiale comprise entre 30 µm et 60 µm.

2. Tuyau flexible (100) selon la revendication 1, dans lequel la couche de blocage (103) comprend un vulcanisat en fluoroélastomère thermoplastique ou un fluoroélastomère thermoplastique.

3. Tuyau flexible (100) selon la revendication 1 ou 2, le tuyau flexible (100) comprenant plusieurs bandes électriquement conductrices (105) qui s'étendent sur le côté intérieur de la couche de blocage (103).

4. Tuyau flexible (100) selon la revendication 3, dans lequel les bandes électriquement conductrices (105) se croisent sur le côté intérieur de la couche de blocage (103).

5. Tuyau flexible (100) selon l'une quelconque des revendications précédentes, dans lequel la couche de blocage homogène (103) comprend un renfoncement (107) pour recevoir la bande électriquement conductrice (105).

6. Tuyau flexible (100) selon l'une quelconque des revendications précédentes, le tuyau flexible (100) comprenant une bande électriquement conductrice (105) qui est disposée sur le côté extérieur (111) de la couche de blocage (103).

7. Tuyau flexible (100) selon l'une quelconque des revendications précédentes, dans lequel la bande électrique (105) recouvre la couche de blocage (103) en forme d'arc de cercle.

8. Tuyau flexible (100) selon l'une quelconque des revendications précédentes, le tuyau flexible (100) comprenant quatre bandes électriques (105) qui sont à chaque fois disposées à une distance de 90° les unes par rapport aux autres.

9. Tuyau flexible (100) selon l'une quelconque des revendications précédentes, le tuyau flexible (100) comprenant une couche intérieure pour recouvrir la bande électrique sur le côté intérieur (109) de la couche de blocage (103).

10. Procédé de fabrication d'un tuyau flexible (100) pour un fluide, comprenant les étapes suivantes :
extrusion d'une bande électriquement conductrice (105) pour évacuer les charges électriques ;
application par extrusion d'une couche de blocage homogène (103) sur les bandes électriquement conductrices (105) pour empêcher une diffusion du fluide ; et
extrusion d'une couche de support extérieure (101) sur la couche de blocage (103) ;
la bande conductrice (105) comprenant un vulcanisat en fluoroélastomère thermoplastique ou un fluoroélastomère thermoplastique, auquel sont ajoutées des charges conductrices, la bande électriquement conductrice (105) pénétrant hors de la couche de blocage (103) à l'intérieur du tuyau flexible (100) et la bande électriquement conductrice (105) étant fabriquée en une épaisseur comprise entre 30 µm et 60 µm.

11. Procédé selon l'une quelconque des revendications 10, dans laquelle la bande électriquement conductrice (105) est extrudée à l'intérieur de la couche de blocage périphérique (103).
